# FASCICULE DE BREVET EUROPEEN

(11) **EP 1 883 724 B1**
(45) Date de publication et mention de la délivrance du brevet: **13.08.2014**
(21) Numéro de dépôt: 06764693.5
(22) Date de dépôt: 24.05.2006
(51) Int. Cl.: D04G 5/00, A01K 75/00

(54) **Noeud et procédé assurant une liaison entre deux lignes, filet de pêche comportant un tel noeud**
Knoten und Verfahren zum Verbinden zweier Leinen, Fischereinetz mit einem solchen Knoten
Knot and method for linking two lines, fishing net comprising such a knot

(30) Priorité: 27.05.2005 FR 0551397; 15.09.2005 FR 0552781; 07.11.2005 FR 0553362; 04.04.2006 FR 0651189
(43) Date de publication de la demande: 06.02.2008
(73) Titulaire: Etablissements Armand Mondiet, 33470 Le Teich (FR)
(72) Inventeur: CONTE, Jean-Bernard, F-29780 Plouhinec (FR)
(74) Mandataire: Fantin, Laurent
(86) Numéro de dépôt international: PCT/FR2006/001216
(87) Numéro de publication internationale: WO 2006/125929

(56) Documents cités:
- FR-A- 2 797 148
- US-A- 5 573 286
- US-A1- 2005 039 371

## Description

La présente invention se rapporte à un noeud susceptible d'assurer la liaison entre deux lignes s'étendant pnrallèlement, plus particulièrement adapté pour assurer la liaison entre un bout supportant au moins une nappe de filet et une ligne de flottaison ou de lest, ainsi qu'au filet ainsi obtenu.

Le document FR-2.682.261 décrit un procédé pour relier des nappes de filets de pêche afin d'obtenir un filet de pêche appelé également « tramails ».

Selon ce document, les nappes sont pré-assemblées et reliées entre elles grâce à un adhésif ou un fil textile. Les mailles supérieures de ce pré-assemblage de nappes de filet sont ensuite enfilées sur un fil de montage qui est lui-même fixé à une ligne de flottaison, appelée également ralingue. De la même manière, les mailles inférieures de ce pré-assemblage sont enfilées sur un fil de montage qui est lui-même fixé à une ligne de lest. Pour la suite de la description, comme pour les différentes figures, on ne va décrire que la partie supérieure du filet, sachant que la partie inférieure peut être réalisée de la même manière.

Un tel montage nécessite un grand nombre d'heures de main d'oeuvre. Pour réduire les coûts de production, les fabricants cherchent de plus en plus à délocaliser la plus grande partie de ce montage dans des zones à faibles coûts de main d'oeuvre. Toutefois, le montage sur les lignes de flottaison et les lignes de lest ne peut être réalisé qu'à proximité des ports d'attache des bateaux. En effet, le transport d'un filet équipé des lignes de flottaison et de lest (avec éventuellement un transport aller des lignes à équiper) est relativement coûteux et a un coût supérieur à celui du montage, contrairement aux nappes de filets qui sont légères et peuvent être transportées d'un continent à l'autre avec des coûts de transport relativement réduits.

Ainsi, les nappes de filets sont pré-montées dans des pays à faibles coûts de main d'oeuvre. Cet ensemble pré-assemblé est ensuite relié aux lignes de flottaison et de lest à l'aide d'un fil de montage.

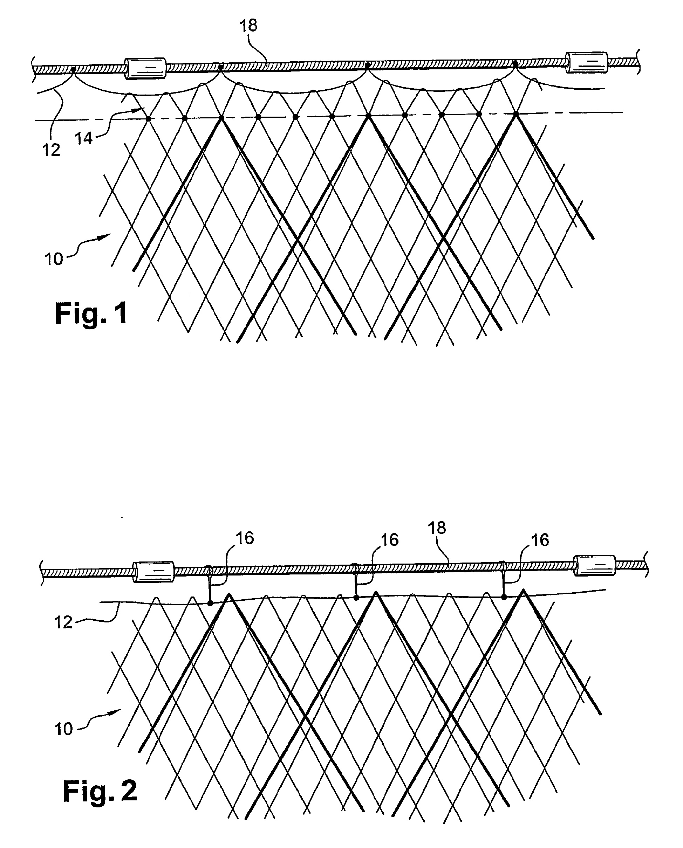

Selon une première technique illustrée par la figure 1, on ajoute à la lisière des nappes 10 des demi-mailles 14 qui assurent également l'assemblage à distance régulière des nappes de grandes mailles avec une nappe de petites mailles. Ensuite, on introduit un fil de montage 12 à travers les demi-mailles 14. D'autres techniques pourraient être utilisées pour relier la lisière des nappes 10 au fil de montage 12.

Selon une technique illustrée par la figure 1, le fil de montage 12 est piqué à intervalles réguliers sur la ligne 18 de flottaison ou de lest en isolant entre chaque point de piquage un nombre déterminé de mailles, à l'occurrence quatre selon l'exemple illustré, les points de piquage étant disposés au droit des jonctions des nappes de petites et grandes mailles.

Même si cette technique permet de garder, lors de l'utilisation, les nappes réparties de manière homogène sur toute la longueur des lignes de flottaison et de lest, elle ne donne pas pleinement satisfaction car le prémontage et le montage sur les lignes de flottaison et/ou de lest sont relativement longs et donc coûteux. En complément, la séparation des lignes de flottaison lors du changement des nappes est relativement longue et coûteuse.

Selon une technique illustrée par la figure 2, on réalise un noeud 16, tel que deux demi-clés inversées, avec le fil de montage 12 pour assurer la liaison entre le fil de montage 12 et la ligne 18 de flottaison ou de lest. Ainsi, le fil de montage 12 est immobilisé au niveau de chaque deux demi-clés inversées et ne coulisse pas par rapport à la ligne 18 de flottaison ou de lest. Un nombre prédéterminé de mailles étant isolées entre deux noeuds 16 consécutifs, lesdits noeuds 16 permettent d'obtenir une répartition homogène des nappes sur la longueur de la ligne 18 de flottaison ou de lest.

Même si cette technique permet un assemblage et un montage rapide, elle ne donne pas satisfaction car ces noeuds peuvent glisser ce qui peut nuire à la répartition des mailles le long de la ligne de flottaison ou de lest.

Le document FR-2797148 décrit un procédé d'assemblage d'une nappe sur une ligne de flottaison qui consiste à transfiler un fil de montage au travers des mailles supérieures de la nappe, à former des oeillets à intervalles réguliers sur le fil de montage. Pour fermer un oeillet, on réalise une boucle à l'aide du fil de montage, un fil de liaison assurant la liaison entre les deux brins de la boucle du fil de montage. Ce mode de réalisation n'est pas satisfaisant car les oeillets ne sont pas serrés sur la ligne de flottaison.

Le document US-5.573.286 propose un noeud susceptible d'être utilisé dans le domaine chirurgical, ce noeud consistant à former au niveau d'une ligne une première boucle comprenant deux brins reliés au niveau du sommet de ladite première boucle et s'écartant au niveau du pied de la première boucle, à recourber vers le bas la partie supérieure de la première boucle et à disposer les parties inférieures des brins entre les parties supérieures des brins reliées au sommet de manière à former une deuxième boucle. Ce noeud appartient à un domaine technique éloigné et ne peut pas convenir.

Aussi, la présente invention vise à pallier les inconvénients de l'art antérieur en proposant un noeud permettant d'assurer la liaison entre un fil de montage et une ligne de flottaison ou de lest et plus généralement entre deux lignes s'étendant parallèlement.

A cet effet, l'invention a pour objet un noeud suivant la revendication 1 susceptible d'assurer une liaison entre deux lignes, cordages ou analogues, notamment une ligne de flottaison ou de lest et un fil de montage auquel est reliée au moins une nappe de filet, caractérisé en ce qu'il consiste à :
- former au niveau d'une ligne une première boucle comprenant deux brins reliés au niveau du sommet de ladite première boucle et s'écartant au niveau du pied de la première boucle,
- recourber vers le bas la partie supérieure de la première boucle et disposer les parties inférieures des brins entre les parties supérieures des brins reliées au sommet de manière à former une deuxième boucle,
- former une troisième boucle avec les parties inférieures des brins sous la deuxième boucle,
- introduire la troisième boucle dans la deuxième boucle,
- écarter l'extrémité de la troisième boucle et les parties inférieures des brins, de manière à former ledit noeud.

La présente invention propose également un procédé suivant la revendication 2 pour assurer une liaison entre deux lignes et l'assemblage suivant la revendication 3 de ce deux lignes obtenu par ce procédé, ainsi qu'un filet de pêche suivant la revendication 4 qui comporte ledit noeud.

D'autres caractéristiques et avantages ressortiront de la description qui va suivre de l'invention, description donnée à titre d'exemple uniquement, en regard des dessins annexés sur lesquels :
- la figure 1 est une vue schématique illustrant une première technique de montage selon l'art antérieur,
- la figure 2 est une vue schématique illustrant une autre technique de montage selon l'art antérieur,
- la figure 3 est une vue en perspective illustrant un noeud selon l'invention réalisé sur une première ligne formant une boucle coulissante dans laquelle passe une autre ligne,
- les figures 4 à 7 illustrent schématiquement les différentes étapes pour la réalisation d'un noeud selon l'invention,
- la figure 8 est une représentation d'un filet utilisant ledit noeud selon un premier mode d'assemblage,
- la figure 9A est une représentation d'un filet utilisant ledit noeud selon un autre mode d'assemblage,
- la figure 9B est une représentation d'un filet utilisant ledit noeud selon un autre mode d'assemblage,
- la figure 10 est une vue schématique illustrant un ensemble pré-assemblé selon une variante de l'invention, après montage sur une ligne de flottaison ou de lest,
- les figures 11 à 13 sont des vues schématiques illustrant les différentes étapes de l'assemblage d'un filet pré-assemblé et d'une ligne de flottaison ou de lest pour obtenir l'assemblage de la figure 10,
- la figure 14 est une vue illustrant en détails une boucle traversant une ligne de répartition,
- la figure 15 est une vue schématique illustrant un ensemble pré-assemblé selon une autre variante de l'invention, après montage sur une ligne de flottaison ou de lest, et
- la figure 16 est une vue illustrant en détails une boucle selon un mode de réalisation.

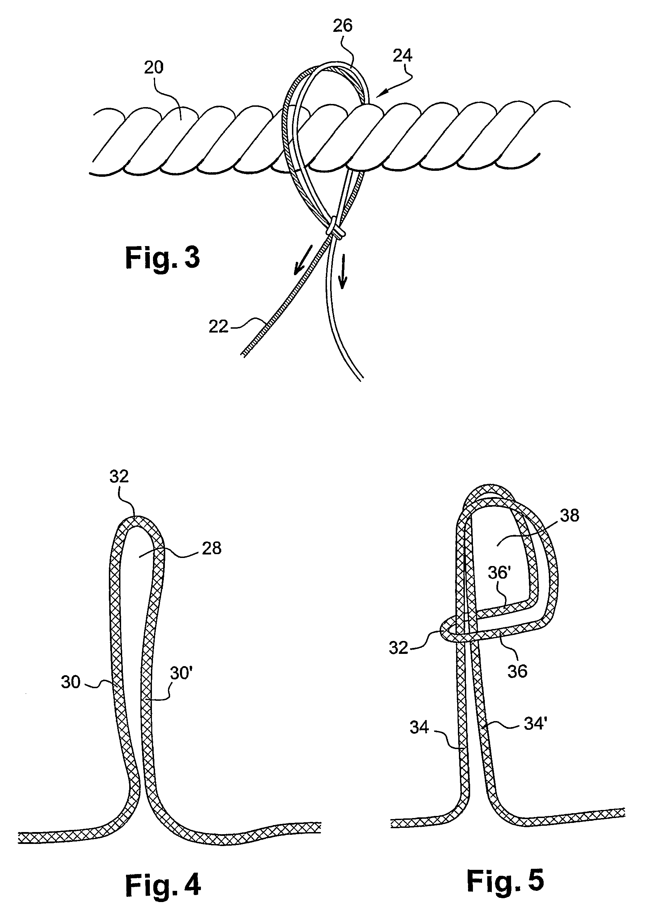

Sur la figure 3, on a représenté une première ligne 20, une seconde ligne 22, lesdites lignes 20 et 22 étant reliées par un noeud 24.

Par ligne, on entend tous les types de cordages, notamment les lignes, les bouts, les fils, les brins, les câbles ou autres qui peuvent être toronnés, tressés, entrelacés, entrecroisés, moulinés ou autres. Les lignes 20 et 22 peuvent être réalisées à partir de différents matériaux. Selon les variantes, les lignes 20 ou 22 peuvent avoir différents diamètres.

Selon un exemple d'application, la première ligne 20 pourrait être une ligne de flottaison ou de lest et la seconde ligne 22 un fil de montage auquel serait reliée au moins une nappe de filet de manière à constituer un filet de pêche.

Le noeud 24 est de type coulissant et il comprend une boucle 26 formée à partir d'une ligne, selon l'exemple la seconde ligne 22, dont les dimensions d'ouverture sont susceptibles de varier de manière à enserrer et s'immobiliser par rapport à l'autre ligne, selon l'exemple la première ligne 20.

Selon l'invention, le noeud 24 est réalisé de la manière suivante :
Comme illustré sur la figure 4, à partir d'une des lignes, on forme une boucle 28 comprenant deux brins 30, 30' reliés au niveau du sommet 32 de la boucle 28 et s'écartant au niveau du pied de la boucle 28.

Comme illustré sur la figure 5, la partie supérieure de la boucle 28 est recourbée vers le bas et les parties inférieures 34, 34' des brins sont placées entre les parties supérieures 36, 36' des brins reliées au sommet 32 de manière à former une boucle 38.

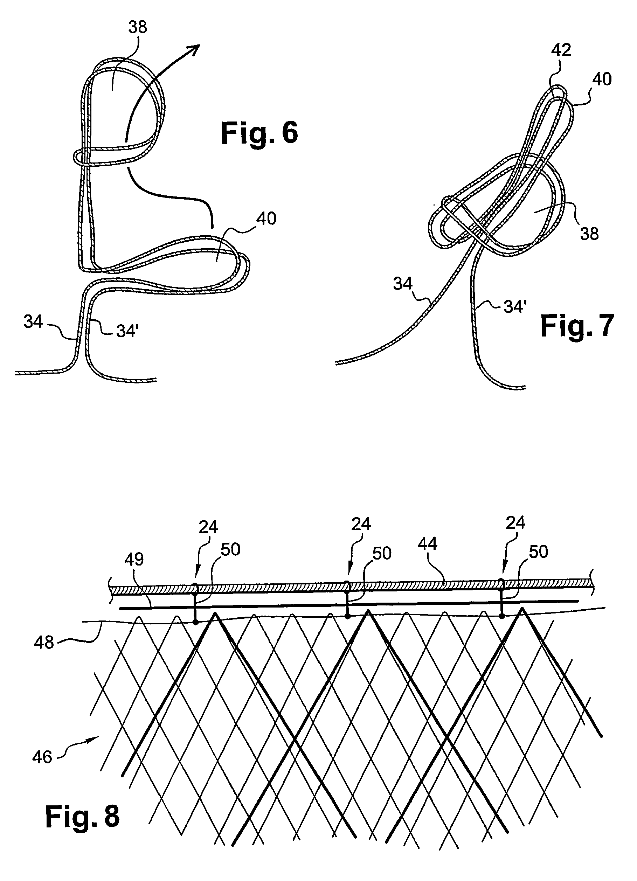

Comme illustré sur la figure 6, une boucle 40 est formée avec les parties inférieures 34, 34' des brins sous la boucle 38.

Cette boucle 40 est introduite dans la boucle 38, comme illustré sur la figure 7.

En écartant l'extrémité 42 de la boucle 40 et les parties inférieures 34, 34' des brins, on obtient un noeud tel qu'illustré sur la figure 3.

De préférence, une pluralité de noeuds 24 avec chacun une boucle 40 sont réalisés au niveau d'une seconde ligne, les noeuds 24 étant séparés d'une distance prédéterminée et isolant un nombre prédéterminé de mailles de la ou des nappes de filet.

L'ensemble des boucles 40 sont enfilées et réparties sur une première ligne, puis les noeuds sont serrés de manière à s'immobiliser avec une répartition donnée et à ne plus coulisser sur ladite première ligne.

Selon une technique de montage, les boucles 40 des noeuds 24 peuvent être enfilées sur un tube rigide ou souple, puis transférées sur une ligne, lorsque cette ligne est enfilée dans le tube et tirée. Toutefois, d'autres solutions techniques peuvent être envisagées.

Selon l'invention, ce noeud permet un montage rapide en raison de la présence d'une boucle 40 coulissante.

Toutefois, grâce à sa conception, lorsqu'il est serré et immobilisé à une position donnée, ce noeud s'immobilise sur la ligne sur laquelle il est enfilé ce qui permet de conserver une répartition homogène des noeuds 24 le long de ladite ligne.

Sur les figures 8, 9A, 9B, 10 et 15, on a représenté un filet comportant au moins une nappe 46. Avantageusement, le filet comprend trois nappes avec des dimensions de mailles différentes. Le mode de réalisation des nappes ainsi que leurs formes et natures ne sont pas plus détaillés car ils sont connus de l'homme du métier.

La ou les nappe(s) 46 sont enfilées sur un bout 48 ou reliées à un bout 48. Par bout, on entend tous les types de tresses, de fils toronnés ou analogue. Pour la suite de la description, le bout 48 est appelé fil de montage.

Comme précédemment, différentes techniques peuvent être utilisées pour assurer la liaison entre la ou les nappes 46 et le fil de montage 48. Selon les variantes, la ou les nappes sont enfilées directement sur le fil de montage. Selon une autre variante, une demi maille peut être ajoutée en bordure des nappes, comme illustré sur la figure 1. En variante, la ou les nappe(s) pourraient être enfilées sur un premier fil de montage, qui est lui-même fixé à un second fil de montage. La liaison entre la ou les nappe(s) et le fil de montage n'est pas plus détaillée car elle est connue de l'homme du métier.

Pour fonctionner, le filet doit être relié à au moins une ligne 44 de flottaison et/ou de lest. Pour la suite de la description, seule la liaison entre le pré-assemblage et la ligne de flottaison va être décrite. Selon les cas, on peut utiliser ce type de liaison ou une autre pour relier le pré-assemblage et la ligne de lest non représentée sur les figures.

Selon l'invention, pour relier la ou les nappes 46 à la ligne de flottaison 44 ou de lest, des boucles 50 sont formées au niveau du fil de montage 48, isolant un nombre déterminé de mailles entre deux boucles 50 successives, et sont enfilées sur la ligne de flottaison ou de lest 44. Les boucles ont des dimensions adaptées pour coulisser librement sur la ligne 44 de flottaison ou de lest malgré les flotteurs 45 ou les lests. D'autres solutions sont envisageables pour assurer la liaison entre un fil de montage et la ligne de flottaison.

Selon les variantes, la distance au niveau du fil de montage 48 séparant deux boucles 50 et/ou le nombre de mailles isolées entre deux boucles consécutives peuvent varier.

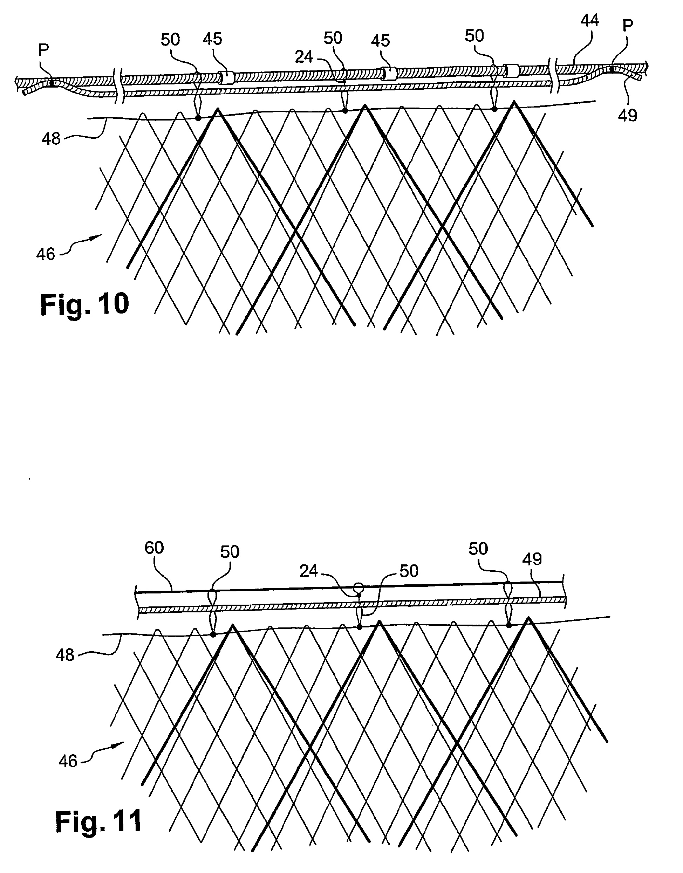

Selon une variante de montage illustrée notamment sur la figure 10, pour assurer une répartition homogène des mailles sur toute la longueur de la ligne de flottaison et/ou de lest 44, le filet comprend un fil de répartition 49, de préférence relié au moins à chacune des extrémités de la ligne de flottaison ou de lest 44 par tous moyens appropriés (points P), au moins certaines boucles 50, et de préférence toutes, passant à travers ledit fil de répartition 49 à intervalles réguliers.

Le fil de répartition 49 est un assemblage d'au moins deux fils, brins, câbles ou analogues qui peuvent être toronnés, tressés, entrelacés, entrecroisés, moulinés ou autres. De plus, ces torons, fils, brins, câbles ou analogues peuvent être réalisés à partir de différents matériaux.

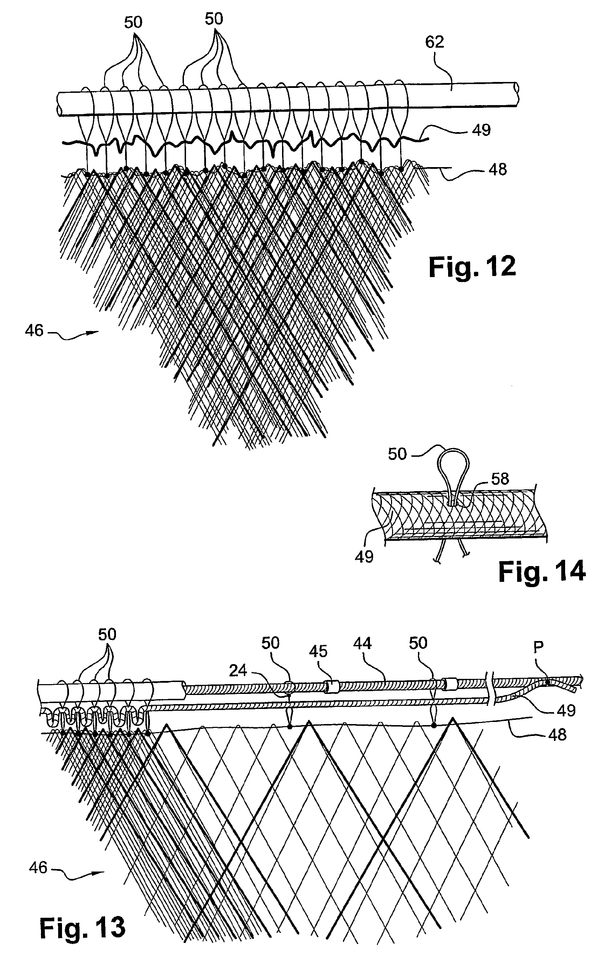

De préférence, le fil de répartition 49 est tressé comme illustré sur la figure 14, des orifices de passage 58 étant ménagés entre les brins dudit fil de répartition, à intervalles sensiblement réguliers, pour permettre le passage des mailles ou des boucles du fil de montage, contrairement à un fil de répartition toronné pour lequel les emplacements des orifices de passage 58 peuvent changer.

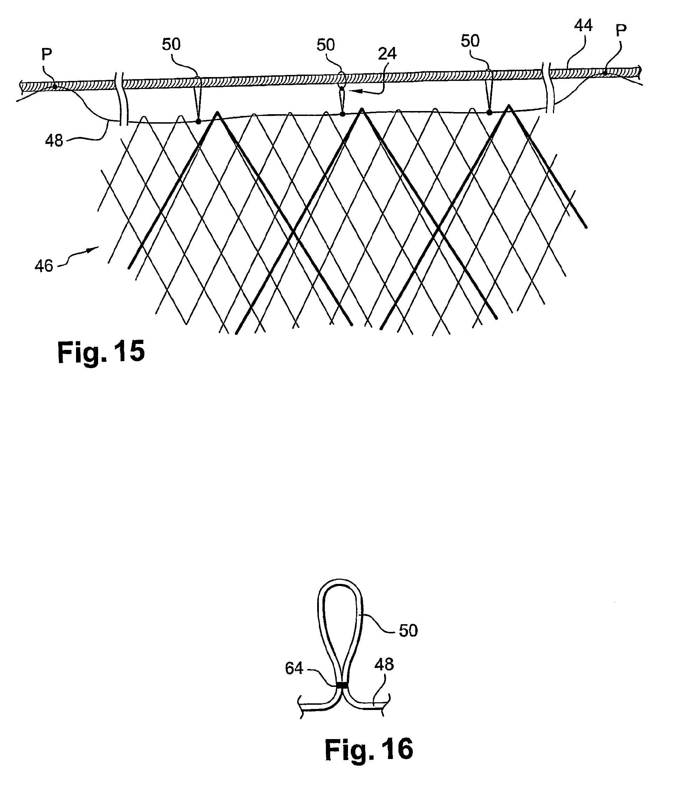

En variante comme illustré sur la figure 15, le filet ne comprend aucun fil de répartition 49. Dans ce cas, le fil de montage 48 est relié à la ligne 44 de flottaison ou de lest, par tous moyens appropriés, au niveau de points P de part et d'autre de la ou des nappes 46. Selon ce montage, la longueur du fil de montage 48 entre les points P est légèrement supérieure à la longueur de la ligne 44 de flottaison ou de lest entre lesdits points P.

Ainsi, le fil de montage 48 relié de part et d'autre de la ou des nappes 46 assure la répartition des nappes sur toute la longueur de la ligne 44 de flottaison ou de lest entre les points P, les boucles 50 pouvant coulisser librement sur la ligne 44 de flottaison ou de lest.

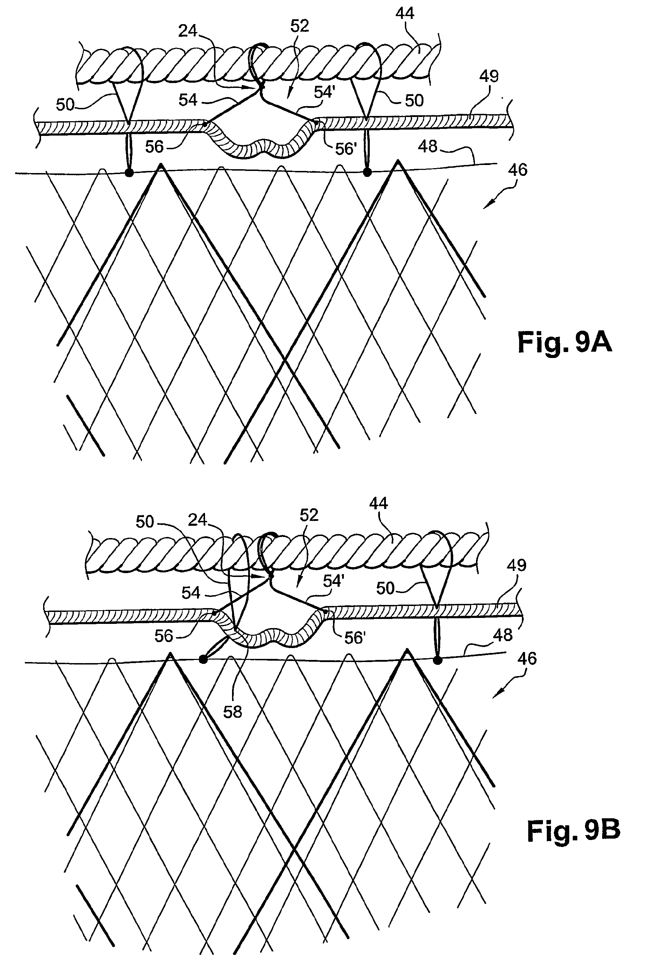

Pour que la ou les nappes de filets 46 restent réparties de manière homogène sur la longueur de la ligne de flottaison 44, un noeud 24 est formé au niveau d'au moins une boucle 50, comme illustré sur les figures 8 et 10. Cette configuration permet de limiter le glissement des nappes le long de la ligne de flottaison. Selon une autre variante illustrée sur les figures 9A et 9B, au moins un lien 52 est intercalé entre la ligne de flottaison 44 et le fil de montage 48 ou la ligne de répartition 49. Ce lien 52 comprend un noeud 24 selon l'invention dont la boucle de serrage enserre la ligne de flottaison 44 ledit noeud définissant deux brins 54, 54', au moins l'un des deux brins étant relié au fil de montage 48 ou la ligne de répartition 49. Avantageusement, les extrémités des deux brins 54, 54' sont reliées à la ligne de répartition 49, ou au fil de montage 48, en des points 56, 56', comme illustré sur les figures 9A et 9B.

Comme illustré sur la figure 9B, l'un des brins 54 ou 54' peut passer au travers d'une boucle 50. Lorsqu'une ligne de répartition 49 est présente, l'orifice ménagé dans la ligne de répartition 49 pour permettre le passage de la boucle 50 est prévu entre les points 56 et 56'. En l'absence de fil de répartition, le point de liaison entre la boucle 50 et le fil de montage 48 est disposé entre les points 56 et 56'. Cette configuration permet de limiter le débattement des boucles 50.

La liaison entre les extrémités des brins 54, 54' et la ligne de répartition 49 peut être obtenue par tout moyen, notamment par un entrelacement des brins et de la ligne de répartition 49, par au moins un noeud, par piquage ou autre.

Selon une autre caractéristique de l'invention, la somme des longueurs des deux brins 54, 54' est inférieure à la longueur de la ligne de répartition ou le fil de montage entre les points 56, 56'. Cette configuration permet de serrer automatiquement le noeud 24 lorsqu'une tension est exercée sur la ligne de répartition.

En variante, le noeud 24 pourrait être formé sur la ligne de répartition et les brins 54, 54' reliés à la ligne de flottaison.

En variante, le fil de montage pourrait se substituer à la ligne de répartition.

De préférence, les noeud 24 sont répartis de manière homogène sur la longueur du fil de montage, la ligne de répartition ou de la ligne de flottaison ou de lest. Le pré-assemblage des nappes 46 avec le fil de montage et éventuellement le fil de répartition 49 est avantageusement réalisé dans des pays à faibles coûts de main d'oeuvre. Avantageusement, les boucles 50 du fil de montage 48 sont enfilées sur un fil 60 appelé également tire câble, comme illustré sur la figure 11. La présence d'un tire-câble 60 facilite le montage ultérieur des lignes de flottaison ou de lest 44 et permet de conserver un pré-assemblage compact et léger ce qui tend à réduire les coûts de transport.

Pour relier le pré-assemblage et la ligne de flottaison 44, les boucles 50 du fil de montage 48 sont enfilées sur la ligne de flottaison ou de lest 44.

Le fil de montage 48 s'étendant le long de la ligne de flottaison ou de lest 44 et isolant entre chaque boucle 50 une portion de filet ou un nombre déterminé de mailles, par exemple quatre mailles, ledit filet est réparti de manière homogène le long de la ligne de flottaison ou de lest 44.

Selon les variantes, pour que le fil de répartition 49 s'étende sur toute la longueur de la ligne de flottaison ou de lest 44, le fil de répartition 49 est relié en des points P de part et d'autre des nappes 46, à chaque extrémité de la ligne de flottaison ou de lest 44, le fil de répartition ayant une longueur légèrement supérieure à celle de la ligne de flottaison ou de lest 44.

Selon d'autres variantes, pour que le fil de montage 48 s'étende sur toute la longueur de la ligne de flottaison ou de lest 44, le fil de montage 48 est relié en des points P de part et d'autre des nappes 46, à chaque extrémité de la ligne de flottaison ou de lest 44, le fil de montage 48 ayant une longueur légèrement supérieure à celle de la ligne de flottaison ou de lest 44.

Selon un mode opératoire, pour relier le pré-assemblage aux lignes de flottaison ou de lest, on peut utiliser un tube 62 de montage dans les pays à coûts de main d'oeuvre élevés. Ce tube 62 n'est pas nécessaire pour le transport comme dans l'art antérieur.

Le pré-assemblage comprenant un tire-câble 60 comme illustré sur la figure 11, l'opérateur peut enfiler les boucles 50 du fil de montage sur un tube 62 en reliant ledit tube au tire-câble puis en tirant sur ce dernier de manière à obtenir l'agencement décrit sur la figure 12.

En suivant, l'opérateur fait passer la ligne de flottaison ou de lest 44 dans le tube 62 et relie à l'autre extrémité du tube une première extrémité de la ligne de flottaison ou de lest 44 à une première extrémité du fil de montage ou de répartition selon les cas. Comme illustré sur la figure 13, en tirant sur la première extrémité de la ligne de flottaison 44 ou du fil de montage ou de répartition 32, les boucles 50 du fil de montage se répartissent le long de la ligne de flottaison ou de lest 44. Lorsque la totalité de la ligne de flottaison ou de lest 44 est passée à travers le tube 62 ou lorsque le fil de montage ou de répartition est étendu le long de la ligne de flottaison ou de lest 44, l'opérateur relie la seconde extrémité du fil de montage ou de répartition à la ligne de flottaison ou de lest 44.

Toutefois, d'autres solutions pourraient être envisagées pour enfiler la ligne de flottaison ou de lest 44 dans les boucles 50 du fil de montage.

Selon un autre mode opératoire, pour relier le pré-assemblage aux lignes de flottaison ou de lest, les boucles 50 peuvent être enfilées à l'extrémité d'une ligne 44 de flottaison ou de lest. On relie alors cette extrémité de la ligne de flottaison ou de lest à une première extrémité du fil de montage ou de répartition. En tirant sur la première extrémité de la ligne de flottaison 26 ou du fil de montage ou de répartition, les boucles 50 du fil de montage se répartissent le long de la ligne de flottaison ou de lest 44. Lorsque le fil de montage ou de répartition est étendu le long de la ligne de flottaison ou de lest 44, l'opérateur relie la seconde extrémité du fil de montage ou de répartition à la ligne de flottaison ou de lest 44.

Selon l'invention, on obtient un montage rapide et simple des lignes de flottaison et de lest ce qui contribue à réduire les coûts.

Selon les variantes, le montage du pré-assemblage peut être réalisé dans une zone à faibles coûts de main d'oeuvre. Dans ce cas, le pré-assemblage comprend la ou les nappe(s), au moins un fil de répartition, le ou les fil(s) de montage (un pour la ligne de flottaison et/ou un pour la ligne de lest) et de préférence un tire-câble 60.

Selon les variantes, chaque boucle 50 est réalisée en faisant un noeud avec le fil de montage de manière à former ladite boucle. Cette solution a toutefois l'inconvénient d'autoriser les variations de la longueur du fil de montage 48 entre deux boucles 50 du fait que l'intensité de serrage du noeud formant la boucle 50 peut varier.

Selon un mode réalisation préféré et illustré sur la figure 16, chaque boucle 50 est formée en réalisant un piquage 64 reliant deux points à l'origine distants du fil de montage 48. Cette solution permet d'avoir une distance constante entre deux boucles 50 ce qui contribue à obtenir une meilleure répartition des nappes par rapport à la ligne de flottaison et/ou de lest.

Bien entendu, l'invention n'est évidemment pas limitée au mode de réalisation représenté et décrit ci-dessus, mais en couvre au contraire toutes les variantes, notamment en ce qui concerne la nature, les dimensions des lignes ainsi que l'application, selon les revendications suivantes.

## Revendications

1. Noeud susceptible d'assurer une liaison entre deux lignes cordages ou analogues, notamment une ligne de flottaison ou de lest et un fil de montage auquel est reliée au moins une nappe de filet, **caractérisé en ce qu'**il consiste à :
- former au niveau d'une première ligne (22) une première boucle (28) comprenant deux brins (30, 30') reliés au niveau du sommet (32) de ladite première boucle (28) et s'écartant au niveau du pied de la première boucle (28),
- recourber vers le bas la partie supérieure de la première boucle (28) et disposer les parties inférieures (34, 34') des brins entre les parties supérieures (36, 36') des brins reliées au sommet (32) de manière à former une deuxième boucle (38),
- former une troisième boucle (40) avec les parties inférieures (34, 34') des brins sous la deuxième boucle (38),
- introduire la troisième boucle (40) dans la deuxième boucle (38),
- écarter l'extrémité (42) de la troisième boucle (40) et les parties inférieures (34, 34') des brins, de manière à former ledit noeud.

2. Procédé pour assurer une liaison entre deux lignes consistant à réaliser au niveau d'une première ligne (22) un noeud selon la revendication 1, à enfiler une seconde ligne (20) dans la boucle formée par ledit noeud puis à serrer ledit noeud de manière à l'immobiliser sur ladite seconde ligne.

3. Assemblage de deux lignes (20, 22) obtenu à partir du procédé selon la revendication 2 comprenant une pluralité de noeuds selon la revendication 1.

4. Filet de pêche comportant au moins une ligne de flottaison (44), de préférence une ligne de lest, et au moins une nappe de filet (46) reliée au moins à la ligne de flottaison (44) ainsi qu'au moins un noeud (24) selon la revendication 1 permettant de relier ladite au moins une ligne de flottaison (44) et ladite au moins une nappe (46).

5. Filet de pêche selon la revendication 4, comportant un fil de montage assurant la liaison entre ladite au moins une nappe de filet (46) et ladite ligne de flottaison ou de lest, **caractérisé en ce qu'**il comprend une pluralité de noeuds selon la revendication 1 réalisés au niveau du fil de montage (48), lesdits noeuds étant séparés sur la ligne de flottaison d'une distance prédéterminée, la ligne de flottaison passant à travers les boucles desdits noeuds.

6. Filet de pêche selon la revendication 4, comportant un fil de montage assurant la liaison entre ladite au moins une nappe de filet (46) et ladite ligne de flottaison ou de lest, **caractérisé en ce qu'**il comprend au moins un lien (52) comprenant un noeud (24) selon la revendication 1 dont la boucle de serrage enserre la ligne de flottaison ou de lest (44), ledit noeud définissant i deux brins (54, 54'), au moins l'un des deux brins étant relié au fil de montage (48) ou à une ligne de répartition (49) intercalée entre le fils de montage (48) et la ligne de flottaison ou de lest (44).

7. Filet de pêche selon la revendication 6, **caractérisé en ce que** les extrémités des deux brins (54, 54') sont reliées au fil de montage (48) ou la ligne de répartition (49) en des points (56, 56'), la somme des longueurs des deux brins (54, 54') étant inférieure à la longueur du fil de montage (48) ou de la ligne de répartition (49) entre les deux points (56, 56').

8. Filet de pêche selon la revendication 4, comportant un fil de montage assurant la liaison entre ladite au moins une nappe de filet (46) et ladite ligne de flottaison ou de lest, **caractérisé en ce qu'**il comprend au moins un lien (52) comprenant un noeud (24) selon la revendication 1 don la boucle de serrage enserre le fil de montage (48) ou une ligne de répartition (49) intercalée entre le fil de montage (48) et la ligne de flottaison ou de lest (44), ledit noeud définissant deux brins (54, 54'), au moins l'un des deux brins étant relié à la ligne de flottaison ou de lest (44).

9. Filet de pêche selon la revendication 8, **caractérisé. en ce que** les extrémités des deux brins (54, 54') sont reliées à la ligne de flottaison ou de lest (44) en des points (56, 56'), la somme des longueurs des deux brins (54, 54') étant inférieure à la longueur de la ligne de flottaison ou de lest (44) entre les points (56, 56').

## Patentansprüche

1. Knoten, der dazu eingerichtet ist, eine Verbindung zwischen zwei Leinen, Tauen oder dergleichen zu bewerkstelligen, insbesondere zwischen einer Schwimm- oder Gewichtsleine und einer Halteschnur, an der wenigstens eine Netzschicht angebracht ist, **dadurch gekennzeichnet, dass** dieser darin besteht, dass:
- im Bereich eines erstes Taus (22) eine erste Schleife (28) mit zwei Strängen (30, 30') gebildet ist, die im Bereich der Spitze (32) der ersten Schleife (28) verbunden sind und sich in den Bereich des Fußes der ersten Schleife (28) erstrecken,
- der obere Abschnitt der ersten Schleife (28) nach unten gebogen ist und die unteren Abschnitte (34, 34') der Stränge zwischen den oberen Abschnitten (36, 36') der mit der Spitze (32) verbundenen Stränge derart angeordnet sind, dass eine zweite Schleife (38) gebildet ist,
- eine dritte Schleife (40) mit den unteren Abschnitten (34, 34') der Stränge unter der zweiten Schleife (38) gebildet ist,
- eine dritte Schleife (40) in die zweite Schleife (38) eingeführt ist,
- das Ende (42) der dritten Schleife (40) und die unteren Abschnitte (34, 34') der Stränge derart voneinander entfernt sind, dass der Knoten gebildet ist.

2. Verfahren, um eine Verbindung zwischen zwei Leinen zu bewerkstelligen, das darin besteht, im Bereich einer ersten Leine (22) einen Knoten nach Anspruch 1 zu bilden, eine zweite Leine (20) in die von dem Knoten gebildete Schleife einzuführen und dann den Knoten zuzuziehen, um diesen auf der zweiten Leine festzulegen.

3. Zusammenstellung von zwei Leinen (20, 22), die durch das Verfahren nach Anspruch 2 erhalten worden ist und eine Vielzahl von Knoten nach Anspruch 1 aufweist.

4. Fischernetz mit wenigstens einer Schwimmleine (44), vorzugsweise mit einer Gewichtsleine und mit wenigstens einer Netzschicht (46), die wenigstens mit der Schwimmleine (44) verbunden ist, ebenso wie mit einem Knoten (24) nach Anspruch 1, der es gestattet, die wenigstens eine Schwimmleine (44) und die wenigstens eine Schicht (46) untereinander zu verbinden.

5. Fischernetz nach Anspruch 4 mit einer Halteschnur, die die Verbindung zwischen der wenigstens einen Netzschicht (46) und der Schwimm- oder Gewichtsleine gewährleistet, **dadurch gekennzeichnet, dass** dieses eine Vielzahl von Knoten nach Anspruch 1 aufweist, die im Bereich der Halteschnur (48) ausgebildet sind, wobei die Knoten auf der Schwimmleine in einem vorbestimmten Abstand getrennt angeordnet sind und wobei die Schwimmleine durch die Schleifen der Knoten hindurchläuft.

6. Fischernetz nach Anspruch 4 mit einer Halteschnur, die die Verbindung zwischen der wenigstens einen Netzschicht (46) und der Schwimm- oder Gewichtsleine gewährleistet, **dadurch gekennzeichnet, dass** dieses wenigstens eine Bindung (52) mit einem Knoten (24) nach Anspruch 1 aufweist, bei dem die Festziehschleife die Schwimm- oder Gewichtsleine (44) umschlingt, wobei der Knoten zwei Stränge (54, 54') bildet und wenigstens einer der beiden Stränge mit der Halteschnur (48) oder mit einer Verteilleine (49) verbunden ist, die zwischen der Halteschnur (48) und der Schwimm- oder Gewichtsleine (44) angeordnet ist.

7. Fischernetz nach Anspruch 6, **dadurch gekennzeichnet, dass** die Enden der zwei Stränge (54, 54') mit der Halteschnur (48) oder der Verteilleine (49) an zwei Punkten (56, 56') verbunden sind, wobei die Summe der Längen der zwei Stränge (54, 54') kleiner als die Länge der Halteschnur (48) oder der Verteilleine (49) zwischen den zwei Punkten (56, 56') ist.

8. Fischernetz nach Anspruch 4, mit einer Halteschnur, die die Verbindung zwischen der wenigstens einen Netzschicht (46) und der Schwimm- oder Gewichtsleine gewährleistet, **dadurch gekennzeichnet, dass** dieses wenigstens eine Verbindung (52) mit einem Knoten (24) nach Anspruch 1 aufweist, bei dem die Festziehschleife die Halteschnur (48) oder eine Verteilleine (49) umschlingt, die zwischen der Halteschnur (48) und der Schwimm- oder Gewichtsleine (44) angeordnet ist, wobei der Knoten zwei Stränge (54, 54') bildet und wenigstens einer der beiden Stränge mit der Schwimm- oder Gewichtsleine (44) verbunden ist.

9. Fischernetz nach Anspruch 8, **dadurch gekennzeichnet, dass** die Enden der zwei Stränge (54, 54') mit der Schwamm- oder Gewichtsleine (44) an Punkten (56, 56') verbunden sind, wobei die Summe der Längen der zwei Stränge (54, 54') kleiner als die Länge der Schwimm- oder Gewichtsleine (44) zwischen den Punkten (56, 56') ist.

## Claims

1. A knot able to provide a connection between two lines, ropes or the like, in particular a flotation or ballast line and a mounting cord to which at least one layer of net is connected, **characterised in that** it comprises:
- forming, at a first line (22), a first loop (28) comprising two strands (30, 30') connected at the top (32) of said first loop (28) and moving away from each other at the foot of the first loop (28),
- downwardly curving the top part of the first loop (28) and disposing the lower parts (34, 34') of the strands between the upper parts (36, 36') of the strands connected at the top (32) so as to form a second loop (38),
- forming a third loop (40) with the lower parts (34, 34') of the strands under the second loop (38),
- introducing the third loop (40) into the second loop (38),
- separating the end (42) of the third loop (40) and the lower parts (34, 34') of the strands, so as to form said knot.

2. A method for providing a connection between two lines, consisting of producing, at a first line (22), a knot according to claim 1, slipping a second line (20) into the loop formed by said knot and then tightening said knot so as to immobilise it on said second line.

3. An assembly of two lines (20, 22) obtained from the method according to claim 2, comprising a plurality of knots according to claim 1.

4. A fishing net comprising at least one flotation line (44), preferably a ballast line, and at least one layer of net (46) connected at least to the flotation line (44) as well as at least one knot (24) according to claim 1, for connecting said at least one flotation line (44) and said at least one layer (46).

5. A fishing net according to claim 4, comprising a mounting cord providing the connection between said at least one layer of net (46) and said flotation or ballast line, **characterised in that** it comprises a plurality of knots according to claim 1 produced at the mounting cord (48), said knots being separated on the flotation line by a predetermined distance, the flotation line passing through the loops of said knots.

6. A fishing net according to claim 4, comprising a mounting cord providing the connection between said at least one layer of net (46) and said flotation or ballast line, **characterised in that** it comprises at least one link (52) comprising a knot (24) according to claim 1, the clamping loop of which grips the flotation or ballast line (44), said knot defining two strands (54, 54'), at least one of the two strands being connected to the mounting cord (48) or to a distribution line (49) interposed between the mounting cord (48) and the flotation or ballast line (44).

7. A fishing net according to claim 6, **characterised in that** the ends of the two strands (54, 54') are connected to the mounting cord (48) or the distribution line (49) at points (56, 56'), the sum of the lengths of the two strands (54, 54') being less than the length of the mounting cord (48) or of the distribution line (49) between the two points (56, 56').

8. A fishing net according to claim 4, comprising a mounting cord providing the connection between said at least one layer of net (46) and said flotation or ballast line, **characterised in that** it comprises at least one link (52) comprising a knot (24) according to claim 1, the clamping loop of which grips the mounting cord (48) or a distribution line (49) interposed between the mounting cord (48) and the flotation or ballast line (44), said knot defining two strands (54, 54'), at least one of the two strands being connected to the flotation or ballast line (44).

9. A fishing net according to claim 8, **characterised in that** the ends of the two strands (54, 54') are connected to the flotation or ballast line (44) at points (56, 56'), the sum of the length of the two strands (54, 54') being less than the length of the flotation or ballast line (44) between the points (56, 56').
